# EUROPEAN PATENT APPLICATION

(11) **EP 1 176 648 A2**
(43) Date of publication of application: **30.01.2002**
(21) Application number: 01118350.6
(22) Date of filing: 27.07.2001
(51) Int. Cl.: H01M 2/02, H01M 2/30, H01M 10/04

(54) **Process for the preparation of battery**

(30) Priority: 27.07.2000 JP 2000226740
(71) Applicant: GS-MELCOTEC CO., LTD., Kyoto-shi, Kyoto 601-8397 (JP)
(72) Inventor: Komatsu, Shigeo, Kisshoin, Minami-ku, Kyoto-shi, Kyoto (JP)
(74) Representative: Grünecker, Kinkeldey, Stockmair & Schwanhäusser Anwaltssozietät

(57) **Abstract**

The process for the preparation of a battery according to the present invention comprises the following steps. An electricity-generating element having a positive electrode lead member and a negative electrode lead member drawn therefrom is inserted into a battery case. The opening of the battery case is sealed with both the positive electrode lead member and the negative electrode lead member leading to the exterior thereof. The position of the battery case and the electricity-generating element relative to each other is fixed. The positive electrode lead member and/or the negative electrode lead member are worked into an external terminal with a predetermined position on said battery case as reference. In accordance with this preparation process, the position of the external terminals can be corrected by working the lead members even if there is some variation in the position of the lead members. In this manner, the variation in the position of the external terminals can be lessened, making it possible to provide a battery having external terminals in stable positions.

## Description

### FIELD OF THE INVENTION

The present invention relates to a process for the preparation of a battery.

### BACKGROUND ART

In recent years, electronic devices such as cellular phones, portable personal computers and portable video cameras have been developed, where the electronic devices are made into smaller and thinner portable ones. Under these circumstances, batteries to be incorporated in these electronic devices are required to have a high energy density.

As the batteries satisfying this requirement, there have been developed non-aqueous electrolyte secondary batteries, solid polymer secondary batteries and gel-like polyelectrolyte secondary batteries. These batteries are advantageous in that when they comprise a properly selected active material, they exhibit a voltage as high as 4 V or higher, a high energy density per unit weight, and can be available in a small size and light weight and an excellent cycle life performance and used repeatedly charged and discharged.

As the case for these batteries, there has heretofore been used a cylindrical or prismatic case made of a metal such as stainless steel, nickel-plated iron, aluminum, etc. Such a battery case has a high airtightness and an excellent mechanical strength. However, the heavy weight of the metallic material causes restrictions on the further reduction of the weight of batteries. In order to solve this problem and further reduce the weight and thickness of the battery, a method of receiving an electricity-generating element into a bag-shaped battery case has been put to practical use. For example, it has been practiced to prepare a thin secondary battery from a metal-laminated resin film having an airtight structure as a bag-shaped battery case. In this arrangement, a battery having a reduced weight and a high energy density per unit weight free from electrolyte leak and contamination of water from the exterior of the battery can be provided.

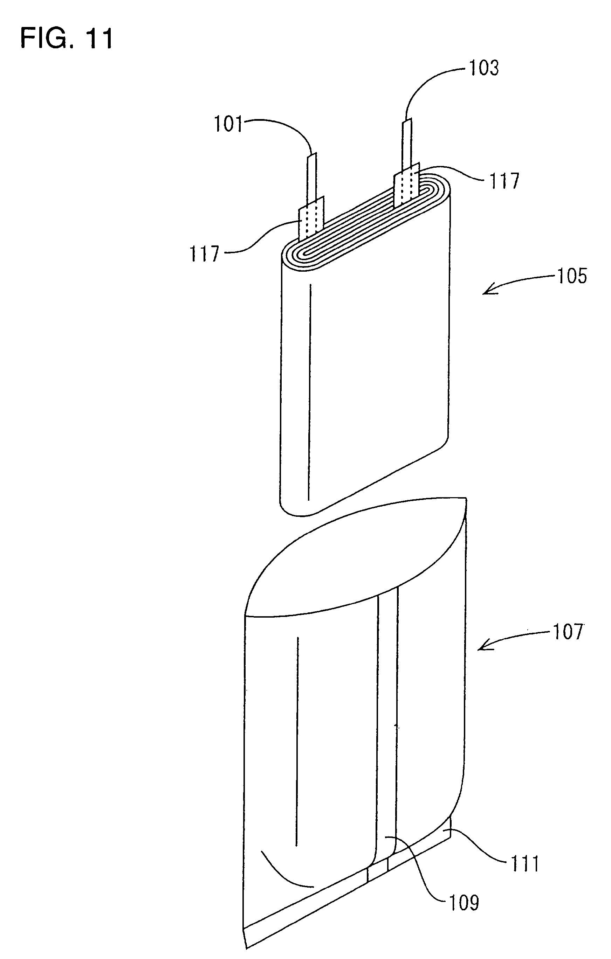

Such a thin secondary battery has heretofore been prepared, for example, as shown in Figs. 11 to 14. Lead members 101 and 103 are ultrasonically welded to positive and negative electrodes, respectively. The positive electrode and the negative electrode are then wound with a separator provided interposed therebetween into an ellipsoidal shape to prepare an electricity-generating element 105.

Separately, as a battery case 107, a flexible metal-laminated resin film having various layers such as PET (polyethylene terephthalate) layer, aluminum foil layer and PE (polyethylene) layer bonded each other is prepared. This film is folded with PE layer inside, and then heat-fused at both ends thereof and one side edge thereof to form a back sealed portion 109 and a bottom sealed portion 111, respectively, forming a bag.

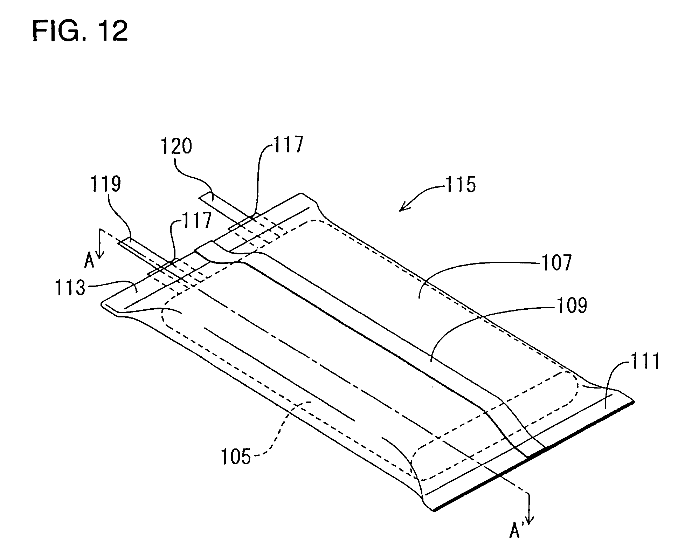

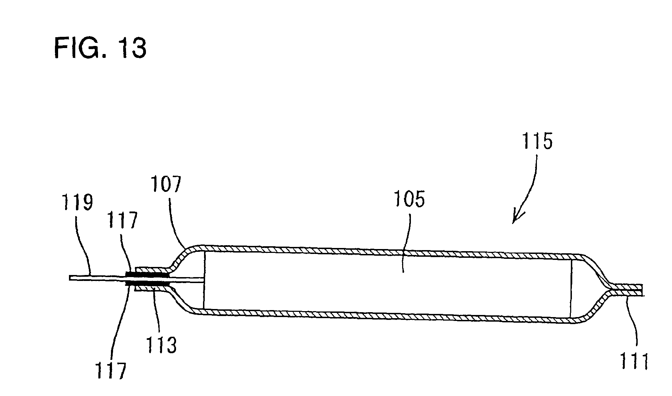

Subsequently, as shown in Fig. 11, the electricity-generating element 105 is inserted into the battery case 107 from its opening with the lead members 101 and 103 drawn from the electricity-generating element 105 being extending from the opening of the battery case 107. An electrolytic solution is then injected into the interior of the battery case 107. The edges of the opening of the battery case 107 are heat-sealed to each other to form a sealed portion 113 and hence seal the opening of the battery case 107. In this manner, a thin secondary battery 115 was obtained as shown in Figs. 12 and 13. The lead members 101 and 103 extend from the opening of the battery case 107 with a thermoplastic resin coat layer 117 interposed therebetween. In this arrangement, sealing of the battery case 107 is assured, making it possible to prevent electrolyte leak and contamination by water from the exterior of the battery. Further, in this thin secondary battery 115, the lead members 101 and 103 which are outside the sealed portion 113 of the battery case 107 as they are form external terminals 119 and 120, respectively.

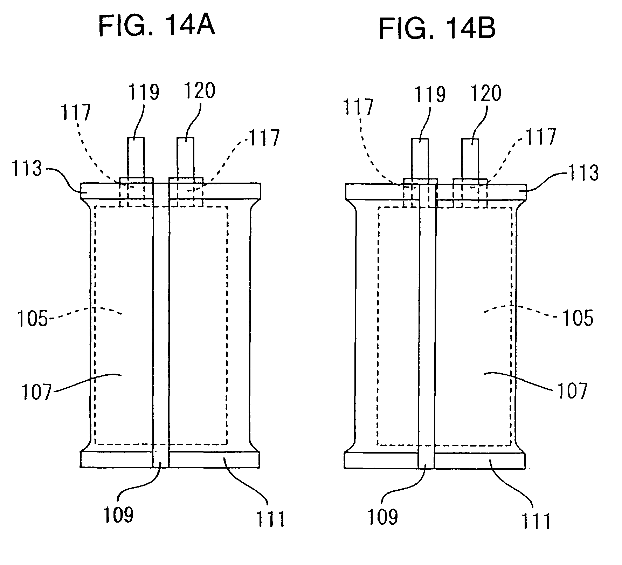

The position of the external terminals 119 and 120 are decided depending on the position of the terminals of the electronic devices for which the thin secondary battery 115 is used. However, this preparation process is disadvantageous in that the position of the external terminals 119 and 120 relative to the battery case 107 can vary. This phenomenon is attributed to the following reasons. For example, as shown in Fig. 14, the battery case 107 is prepared somewhat larger than the electricity-generating element 105 so that it can easily receive the electricity-generating element 105. Therefore, as shown in Figs. 14A and 14B, the position of the electricity-generating element 105 thus inserted relative to the battery case 107 can deviate somewhat from the predetermined value. For example, as shown in Fig. 14A, the position of the electricity-generating element 107 relative to the battery case 107 deviates leftward from the predetermined value. As shown in Fig. 14B, the position of the electricity-generating element 107 relative to the battery case 107 deviates rightward from the predetermined value. This causes the position of the external terminals 119 and 120 relative to the battery case 107 to vary. Further, since the battery case 107 is made of a flexible laminated film, the position of the electricity-generating element 105 relative to the battery case 107 can easily vary, increasing the variation of the position of the external terminals 119 and 120.

Moreover, when the lead members 101 and 103 are attached to the electrodes, the position of attachment can vary. In this case, because the lead members 101 and 103, as they are, form the external terminals 119 and 120, respectively, the variation of the attached position of the lead members 101 and 103 directly cause the position of the external terminals 119 and 120 to vary, respectively.

Moreover, when the positive electrode and the negative electrode with a separator interposed therebetween are worked to form an ellipsoidal shape, the position of the positive electrode and the negative electrode relative to each other can vary, resulting in the variation of the position of the external terminals 119 and 120.

Due to these causes, the position of the external terminals 119 and 120 can vary, increasing the production of defectives during the production process.

### SUMMARY OF THE INVENTION

It is therefore an object of the present invention to provide a battery having a reduced variation in the position of external terminals formed by lead members and hence stably-positioned external terminals.

The foregoing object of the present invention will become apparent from the following detailed description and examples.

The process for the preparation of a battery according to the present invention comprises the following steps. An electricity-generating element having a positive electrode lead member and a negative electrode lead member drawn therefrom is inserted into a battery case. The opening of the battery case is sealed with both the positive electrode lead member and the negative electrode lead member leading to the exterior thereof, so that the position of the battery case and the electricity-generating element relative to each other is fixed. The positive electrode lead member and/or the negative electrode lead member are worked into an external terminal with a predetermined position on the battery case as reference.

In accordance with the preparation process of the present invention, the opening of the battery case is sealed with both the positive electrode lead member and the negative electrode lead member leading to the exterior thereof, and the position of the battery case and the electricity-generating element relative to each other is fixed. In this manner, the position of the positive electrode lead member and the negative electrode lead member relative to the battery case can be fixed. In this fixed position, the position of the positive electrode lead member and the negative electrode lead member relative to the battery case can vary. In particular, in the case where the battery case is in the form of bag made of flexible metal-laminated resin film, the resulting variation in the position of the external terminals is great.

Accordingly, in accordance with the preparation process of the invention, after the positioning of the electricity-generating element relative to the battery case, the positive electrode lead member and/or the negative electrode lead member is/are worked with a predetermined position of the battery case as reference. In this manner, the position of the positive electrode lead member and the negative electrode lead member relative to the battery can be corrected to reduce its variation.

Of course, positioning can be tried when the electricity-generating element is inserted into the battery case or the positive electrode lead member and the negative electrode lead member are attached to the electrodes. However, it is very difficult and complicated to conduct positioning in all these procedures. Accordingly, in accordance with the preparation process of the present invention, the positive electrode lead member and/or the negative electrode lead member can be worked, making it possible to lessen the variation in position developed due to various causes prior to this working step. Thus, a very simple method can be used to lessen the variation of the position of the external terminals formed by the positive electrode lead member and the negative electrode lead member, making it possible to provide a battery having external terminals in stable positions.

### BRIEF DESCRIPTION OF THE DRAWINGS

By way of example and to make the description more clear, reference is made to the accompanying drawings in which:
Fig. 1 is a plan view illustrating a positive electrode according to an embodiment of implication of the present invention;
Fig. 2 is a plan view illustrating a negative electrode according to an embodiment of implication of the present invention;
Fig. 3 is an exploded perspective view illustrating an electricity-generating element according to an embodiment of implication of the present invention;
Fig. 4 is a perspective view illustrating a process for winding an electricity-generating element according to an embodiment of implication of the present invention;
Fig. 5 is a perspective view illustrating an electricity-generating element and a battery case according to an embodiment of implication of the present invention;
Fig. 6 is a perspective view illustrating a sealed battery according to an embodiment of implication of the present invention;
Fig. 7 is a plan view illustrating a process for working a lead member according to an embodiment of implication of the present invention;
Fig. 8 is a plan view illustrating a process for working a lead member according to another embodiment of implication of the present invention;
Fig. 9 is a perspective view illustrating a battery in a completed form according to an embodiment of implication of the present invention;
Fig. 10 is a perspective view illustrating a battery according to another embodiment of implication of the present invention;
Fig. 11 is a perspective view illustrating a electricity-generating element and a battery case of the prior art;
Fig. 12 is a perspective view illustrating a battery in a completed form of the prior art;
Fig. 13 is a sectional view taken on the line A-A of Fig. 12; and
Figs. 14A and 14B are plan views illustrating a battery in a completed form of the prior art.

### DETAILED DESCRIPTION OF THE INVENTION

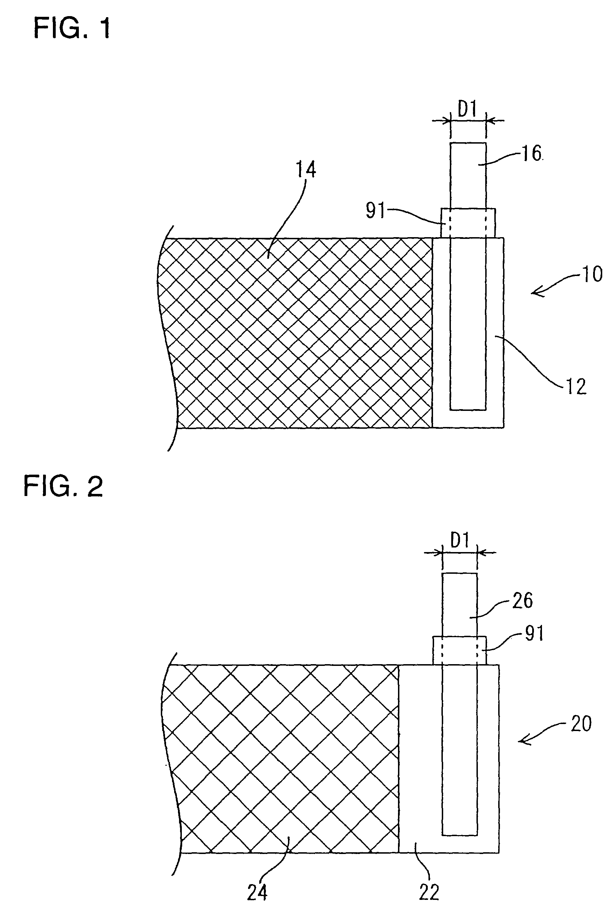

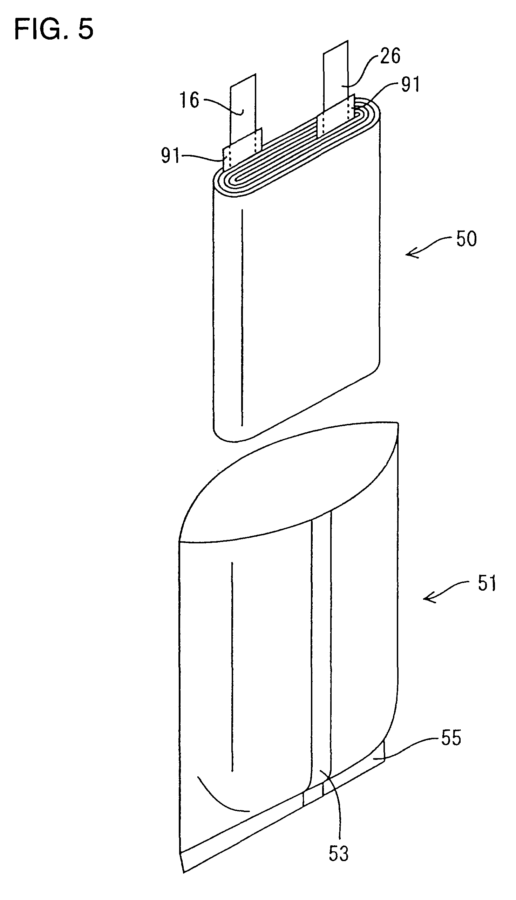

An embodiment of the preparation process according to the invention will be described with reference to an example shown in Figs. 1 to 10.

The battery prepared by the preparation process of the present invention comprises, for example, an electricity-generating element 50 received in a bag-shaped battery case 51, said electricity-generating element 50 being formed by winding a belt-like positive electrode 10 and a belt-like negative electrode 20 with a separator 30 into a flat shape. The positive electrode 10 comprises an aluminum foil 12 as a current collector having a positive active material 14 (shown by the shade in Fig. 1) such as lithium cobalt oxide (LiCoO₂) coated on the both sides thereof as shown in Fig. 1. The negative electrode 20 comprises a copper foil 22 as a current collector having a negative active material 24 (shown by the shade in Fig. 2) such as graphite coated on the both sides thereof as shown in Fig. 2.

The aluminum foil 12 constituting the positive electrode 10 is free of positive electrode compound 14 at an end thereof to which a positive electrode lead member 16 made of aluminum is ultrasonically welded. The positive electrode lead member 16 extends upward from the electricity-generating element 50. The copper foil 22 constituting the negative electrode 20 is free of negative electrode compound 24 at an end thereof to which a negative electrode lead member 26 made of nickel is ultrasonically welded. The negative electrode lead member 26 extends upward from the electricity-generating element 50.

The positive electrode lead member 16 and the negative electrode lead member 26 are each coated with a thermoplastic resin coat layer 91 as shown in Figs. 1 and 2 to assure that the thermoplastic resin coat layer 91 can be heat-fused to make airtight sealing.

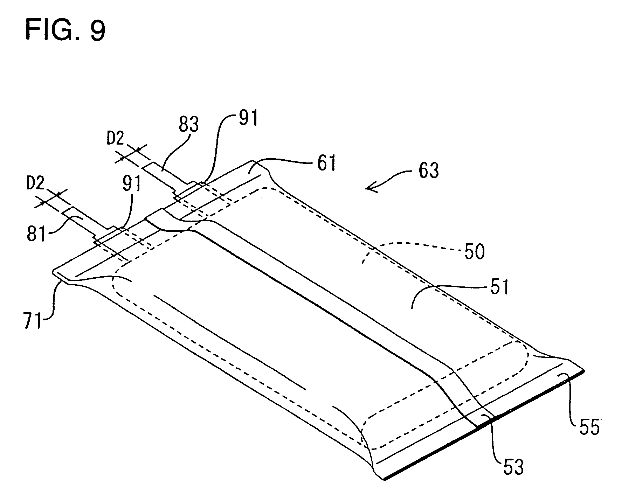

The positive electrode lead member 16 and the negative electrode lead member 26 to be used herein have a width D1 greater than the width D2 of external terminals 81 and 83 of a completed battery shown in Fig. 9.

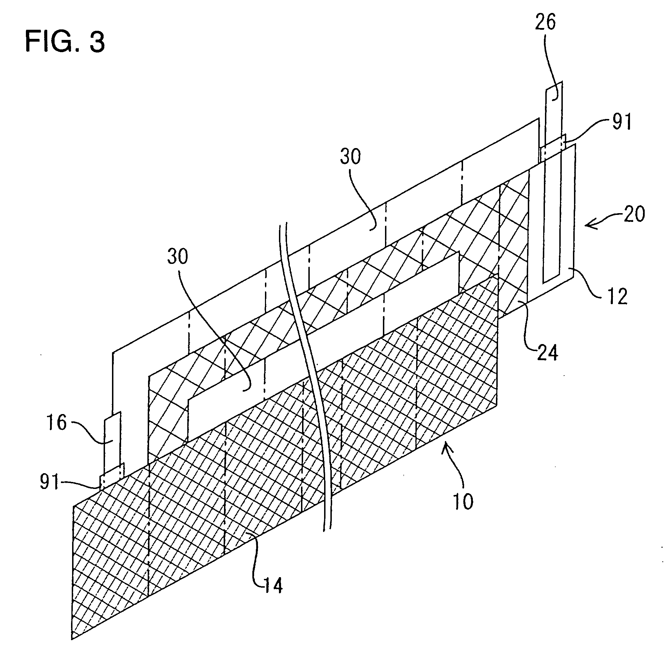

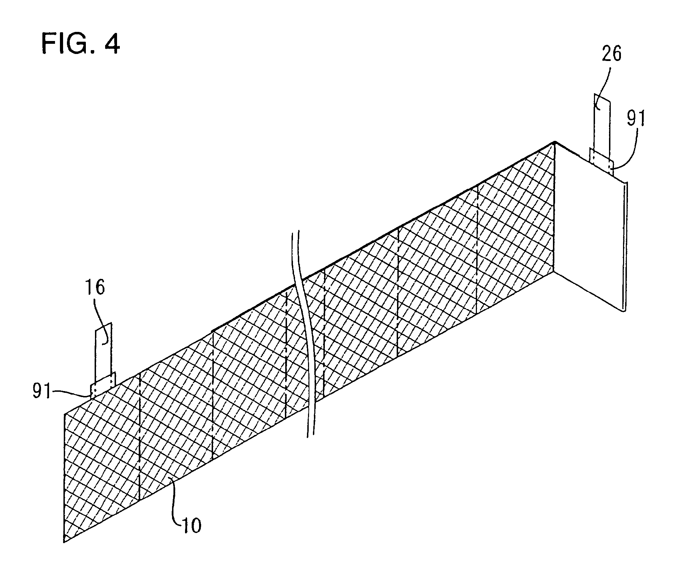

The positive electrode 10 and the negative electrode 20 are laminated on each other with a separator 30 provided interposed therebetween as shown in Fig. 3. As shown in Fig. 4, the laminate is then wound in such an arrangement that it is folded at a predetermined width from the end of the laminate to form a flat electricity-generating element 50. In the wound form, the positive electrode compound 14 and the negative electrode compound 24 are opposed to each other with the separator 30 provided interposed therebetween. By impregnating the separator 30 with a non-aqueous electrolyte (e.g., 1 : 1 : 1 mixture of ethylene carbonate, diethyl carbonate and dimethyl carbonate having hexafluorinated lithium phosphate incorporated therein), a secondary lithium battery is formed.

Separately, as the battery case 51, a flexible metal-laminated resin film is prepared by fusing various layers such as PET (polyethylene terephthalate) layer, aluminum foil layer and PE (polyethylene) layer to each other. The flexible metal-laminated resin film thus prepared is folded with PE layer being inside, and then heat-fused at both ends thereof and one side edge thereof to form a back sealed portion 53 and a bottom sealed portion 55. Thus, a bag-shaped battery case is formed.

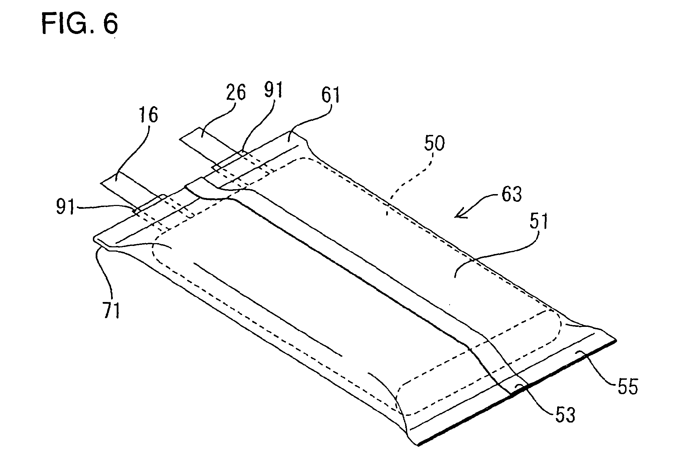

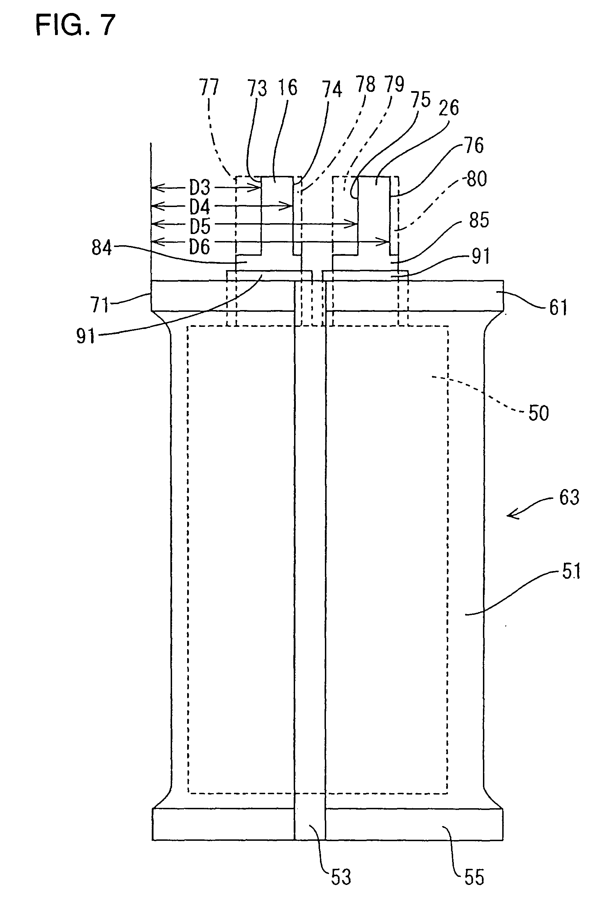

The electricity-generating element 50 is then received into the battery case 51 through the opening thereof. An electrolytic solution is then injected into the battery case. The opening of the battery case is closed, and the both edges of the opening is then pressure-bonded to each other under heating to seal the opening of the battery case 51. As shown in Fig. 6, the both edges of the opening of the battery case 51 are bonded to each other with the positive electrode lead member 16 and the negative electrode lead member 26 interposed therebetween. By sealing the battery case 51 in this arrangement, the position of the electricity-generating element 50 relative to the battery case 51 is fixed. By punching the positive electrode lead member 16 such that the distance between the end 71 of the sealed portion 61 and the edges 73 and 74 of the positive electrode lead member 16 become predetermined values D3 and D4, an external positive electrode terminal 81 is formed as shown in Fig. 7. Similarly, by punching the negative electrode lead member 26 such that the distance between the end 71 of the sealed portion 61 and the edges 75 and 76 of the negative electrode lead member 26 reach predetermined values D5 and D6, an external negative electrode terminal 83 is formed. By the punching, undesirable portions 77, 78, 79 and 80 are removed. The predetermined distances D3, D4, D5 and D6 are determined depending on the width D2 of the external terminals 81 and 83 and the predetermined position of the external terminals 81 and 83 from the end 71 of the sealed portion in a completed battery shown in Fig. 9. Thus, a battery 63 is prepared. In accordance with this preparation process, a battery having the external terminals 81 and 83 each in stable positions can be provided.

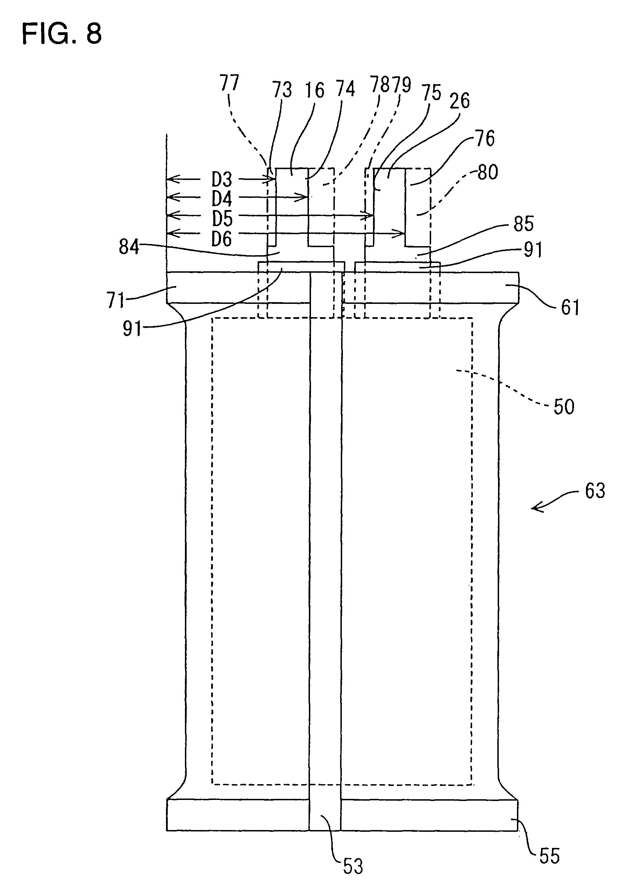

In some detail, as shown in Figs. 7 and 8, when the electricity-generating element 50 is inserted into the battery case 51, the position of the electricity-generating element 50 relative to the battery case 51 can deviate somewhat from the predetermined value.

In accordance with the preparation process of the present invention, after the positioning of the electricity-generating element 50 relative to the battery case 51, the positive electrode lead member 16 and/or the negative electrode lead member 26 is/are worked with a predetermined position of the battery case 51 as reference. That is, at lease one of the positive electrode lead member 16 and the negative electrode lead member 26 is/are worked to have predetermined position(s) to the battery case and have predetermined size(s).

In any of the batteries 63 of Figs. 7 and 8, the positive electrode lead member 16 is punched in such an arrangement that the distance between the end 71 of the sealed portion 61 and the edges 73 and 74 of the positive electrode lead member 16 are predetermined values D3 and D4, respectively. Similarly, the negative electrode lead member 26 is punched in such an arrangement that the distance between the end 71 of the sealed portion 61 and the edges 75 and 76 of the negative electrode lead member 26 are predetermined values D5 and D6, respectively.

In other words, the working is conducted in such an arrangement that the position of the external terminals 81 and 83 from the end 71 of the sealed portion 61 are fixed, making it possible to correct the variation of the position of the external terminals 81 and 83 developed during preparation.

The external terminals 81 and 83 may preferably have wide sections 84 and 85, respectively, left unpunched at which they are drawn from the battery case 51. By thus having the wide sections 84 and 85 left unpunched, the necessity of working the positive electrode lead member 16 and/or negative electrode lead member 26 up to a position close to the battery case 51 can be eliminated, facilitating the working and hence enhancing the productivity and making it unlikely that the battery case 51 can be damaged.

The working of the positive electrode lead member 16 and/or negative electrode lead member 26 is not specifically limited but may be accomplished by punching as mentioned above, or laser cutting, dimensional adjustment by folding or the like.

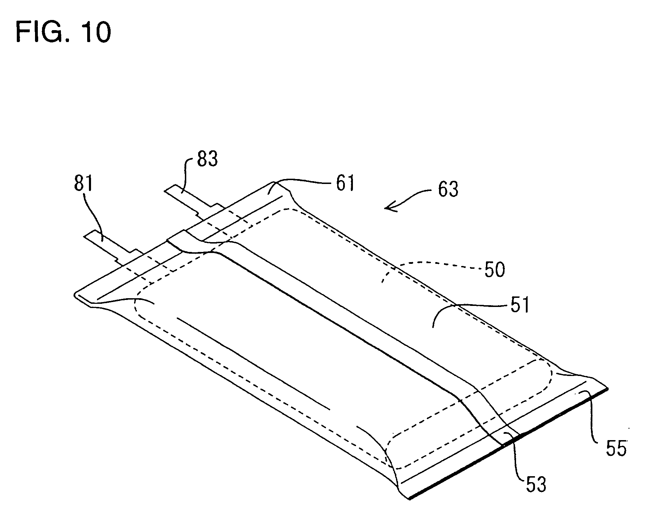

In another embodiment of implication of the present invention, the opening of the battery case 51 may be sealed with the external positive electrode terminal 81 and the external negative electrode terminal 83 uncoated with a resin coat layer 91 at the sealed portion 61 as shown in Fig. 10.

The preparation process of the invention can be widely used regardless of which the battery is primary or secondary.

The positive electrode material to be used in the invention is not specifically limited. In the case of secondary lithium battery, examples of the compound capable of absorbing/releasing lithium include an inorganic compound such as composite oxide represented by the composition formula LiₓMO₂ or Li_{y}M₂O₄ (in which M represents a transition metal, x is from not smaller than 0 to not greater than 1 (0 ≤ x ≤ 1), and y is from not smaller than 0 to not greater than 2 (0 ≤ y ≤ 2)), oxide having tunnel-like pores and laminar metal chalcogenide or organic compound such as electrically-conductive polymer. These compounds may be used in admixture. Examples of the positive electrode materials employable herein include LiCoO₂, LiNiO₂, LiMn₂O₄, Li₂Mn₂O₄, MnO₂, FeO₂, V₂O₅, V₆O₁₃, TiO₂, TiS₂, and polyaniline.

The negative electrode material to be used in the invention is not specifically limited. In the case of secondary lithium battery, an alloy of lithium with Al, Si, Pb, Sn, Zn, Cd or the like, transition metal oxide such as LiFe₂O₃, WO₂ and MoO₂, carbon-based material such as graphite and carbon, lithium nitride such as Li₅(Li₃N), metallic lithium foil, or mixture thereof may be used.

The electrolytic solution to be used in the invention is not specifically limited. In the case of secondary lithium battery, examples of the solvent for non-aqueous electrolytic solution include a polar solvent such as ethylene carbonate, propylene carbonate, dimethyl carbonate, diethyl carbonate, γ-butyrolactone, sulfolane, dimethyl sulfoxide, acetonitrile, dimethylformamide, dimethylacetamide, 1,2-dimethoxyethane, 1,2-diethoxyethane, tetrahydrofuran, 2-methyltetrahydrofuran, dioxolane and methyl acetate or mixture thereof.

Examples of the lithium salt to be dissolved in the organic solvent include a lithium salt such as LiPF₆, LiClO₄, LiBF₄, LiAsF₆, LiCF₃CO₂, LiCF₃SO₃, LiN(SO₂CF₃)₂, LiN(SO₂CF₂CF₃)₂, LiN(COCF₃)₂ and LiN(COCF₂CF₃)₂ or mixture thereof.

Examples of the separating material such as separator include an insulating microporous polyethylene membrane impregnated with an electrolytic solution, solid polymer electrolyte, gel-like electrolyte comprising a solid polymer electrolyte having an electrolytic solution incorporated therein or combination of an insulating microporous membrane and a solid polymer electrolyte. In the case where a porous solid polymer electrolyte membrane is used as the solid polymer electrolyte, the electrolytic solution to be incorporated in the polymer and the electrolytic solution to be contained in the pores of the polymer may differ from each other.

The present invention is not limited to the embodiments described in the foregoing description in connection with the attached drawings. For example, the following embodiments can be included in the technical scope of the invention. Various changes and modifications can be made in the invention without departing from the spirit and scope thereof.

While the invention has been described in detail and with reference to the case where the electricity-generating element 50 is in a flat form, the electricity-generating element 50 may be in any other forms such as those having a circular or non-circular coil section, or laminate of flat electrodes with a separator provided interposed therebetween or folded material obtained by folding sheet-like electrodes with a separator provided interposed therebetween.

While the invention has been described in detail and with reference to the case where the battery case 51 is in the form of bag made of a flexible metal-laminated resin film, the present invention is not limited thereto and the battery case 51 may be obtained by vacuum-forming, air pressure-forming or pressure-forming a film or sheet.

While the invention has been described in detail and with reference to the case where both the positive electrode lead member 16 and the negative electrode lead member 26 are worked, either one of the positive electrode lead member 16 and the negative electrode lead member 26 may be worked.

While the invention has been described in detail and with reference to specific embodiments thereof, it will be apparent to one skilled in the art that various changes and modifications can be made therein without departing from the spirit and scope thereof.

This application is based on Japanese patent application No. 2000-226740 filed on July 27, 2000, the entire contents thereof being hereby incorporated by reference.

## Claims

1. A process for the preparation of a battery which comprises:
(1) inserting an electricity-generating element having a positive electrode lead member and a negative electrode lead member drawn therefrom into a battery case,
(2) sealing said battery case with both of said positive electrode lead member and said negative electrode lead member leading to the exterior thereof, so as to fix the position of said battery case and said electricity-generating element relative to each other; and
(3) working at least one of said positive electrode lead member and said negative electrode lead member into an external terminal with a predetermined position on said battery case as reference.

2. The process for the preparation of a battery according to Claim 1, wherein said battery case is in the form of bag comprising a flexible metallic laminate resin film.
